# FASCICULE DE BREVET EUROPEEN

(11) **EP 0 948 469 B1**
(45) Date de publication et mention de la délivrance du brevet: **10.10.2001**
(21) Numéro de dépôt: 97948950.7
(22) Date de dépôt: 28.11.1997
(51) Int. Cl.: C04B 35/80, C04B 35/628

(54) **MATERIAU COMPOSITE A MATRICE CERAMIQUE ET RENFORT EN FIBRES SiC ET PROCEDE POUR SA FABRICATION**
VERBUNDWERKSTOFF MIT KERAMISCHER MATRIX UND VERTÄRKUNG AUS SIC-FASERN SOWIEVERFAHREN ZU SEINER HERSTELLUNG
COMPOSITE MATERIAL WITH CERAMIC MATRIX AND SiC FIBER REINFORCEMENT, METHOD FOR MAKING SAME

(30) Priorité: 28.11.1996 FR 9614604
(43) Date de publication de la demande: 13.10.1999
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: GOUJARD, Stéphane, F-33700 Mérignac (FR); CAILLAUD, Alain, F-33880 Saint Caprais de Bordeaux (FR); BERTRAND, Sébastien, F-24520 Cours de Pile (FR); PAILLER, René, F-33610 Cestas (FR); CHARVET, Jean-Luc, F-33650 Cabanac (FR)
(74) Mandataire: Joly, Jean-Jacques
(86) Numéro de dépôt international: FR9702148
(87) Numéro de publication internationale: WO9823555

(56) Documents cités:
- WO-A-95/09136
- WO-A-96/13472
- US-A- 5 071 679
- US-A- 5 246 736
- AKIRA KAMIYA ET AL: "MECHANICAL PROPERTIES OF UNIDIRECTIONAL HI-NICALON FIBER-REINFORCED SI3N4 MATRIX COMPOSITES" JOURNAL OF THE CERAMIC SOCIETY OF JAPAN, INTERNATIONAL EDITION, vol. 102, no. 10, 1 octobre 1994, pages 959-962, XP000495870 cité dans la demande

## Description

La présente invention concerne les matériaux composites à matrice céramique, et plus particulièrement les matériaux composites comprenant un renfort fibreux en fibres constituées essentiellement de carbure de silicium (SiC), et une couche d'interphase entre les fibres du renfort et la matrice céramique.

Les matériaux composites à matrice céramique sont utilisés dans diverses applications, par exemple dans les domaines aéronautique et spatial, où sont exploitées leurs propriétés thermostructurales, c'est-à-dire leur capacité à constituer des éléments de structure en raison de leur tenue mécanique, notamment en flexion, en traction et aux chocs, bien supérieure à celle des céramiques massives, et leur capacité à conserver ces propriétés mécaniques jusqu'à des températures élevées pouvant atteindre 1500°C ou plus.

La réalisation de matériaux composites thermostructuraux avec une interphase entre fibres et matrice est connue notamment des documents US-A-4 752 503 et US-A-5 026 604. L'interphase utilisée est en carbone pyrolytique (PyC) ou nitrure de bore (BN) et a une structure anisotrope de type lamellaire, ou en feuillets, afin de favoriser la déviation de fissures apparaissant dans la matrice céramique, pour éviter que ces fissures parviennent aux fibres et entraînent une destruction prématurée du matériau par rupture des fibres du renfort fibreux.

Dans des matériaux composites à matrice céramique, la fissuration de la matrice est quasi inévitable, dès la fabrication, en raison des différences de dilatation thermique entre le renfort et la matrice.

L'utilisation d'une interphase lamellaire qui établit une liaison relativement faible entre les fibres et la matrice est donc avantageuse pour allonger la durée de vie du matériau en créant des zones de déviation de fissures dans lesquelles les contraintes à fond de fissure peuvent se dissiper par décohésion localisée de la microstructure lamellaire de l'interphase.

Toutefois, dans des conditions d'utilisation sous atmosphère oxydante et à température élevée, la propagation des fissures jusqu'à l'interphase offre des voies d'accès à l'oxygène. Il se produit alors une oxydation de l'interphase PyC ou BN, voire de la fibre sous-jacente qui conduit à une modification des liaisons fibres-matrice et, progressivement, à un endommagement et à la rupture du matériau.

Des solutions ont été proposées pour empêcher ou au moins retarder l'accès de l'oxygène à l'interphase entre fibres et matrice, notamment en colmatant des fissures apparaissant au sein de la matrice, ou en freinant la propagation des fissures dans la matrice.

Ainsi, il est bien connu d'introduire dans la matrice un composé capable de cicatriser les fissures par formation d'un verre. Le composé est choisi pour que le verre puisse colmater les fissures, et empêcher le passage de l'oxygène, par passage à l'état pâteux aux températures d'utilisation du matériau composite. A titre d'exemple, il pourra être fait référence au document US-A-5 246 736 qui décrit la réalisation d'au moins une phase de la matrice par un système ternaire Si-B-C capable de former un verre, notamment de type borosilicate, ayant des propriétés autocicatrisantes, et au document WO-A-96/30317 qui décrit la formation d'une matrice auto-cicatrisante.

Par ailleurs, le document US-A-5 079 639 décrit un matériau composite à ténacité améliorée par séquençage de la matrice de sorte que des zones de déviation de fissures sont engendrées au sein de la matrice empêchant les fissures de progresser directement jusqu'à l'interphase.

Les procédés utilisant une phase auto-cicatrisante sont efficaces dans une plage de température limitée où la propriété d'auto-cicatrisation est présente, tandis que les procédés utilisant une matrice séquencée retardent la propagation des fissures mais ne les empêchent pas d'atteindre l'interphase.

Aussi, la présente invention a-t-elle pour but de fournir un matériau composite à matrice céramique et fibres essentiellement SiC présentant des propriétés améliorées en empêchant plus efficacement les fissures d'atteindre la couche d'interphase entre fibres et matrice.

Ce but est atteint du fait que les fibres de renfort sont des fibres longues qui contiennent moins de 5% at. d'oxygène résiduel et ont un module supérieur à 250 GPa, et la couche d'interphase est fortement liée aux fibres et à la matrice de sorte que les résistances à la rupture par cisaillement au sein de la couche d'interphase et au niveau des liaisons fibres-interphase et interphase-matrice sont supérieures à celles rencontrées au sein de la matrice.

Des caractéristiques remarquables de l'invention résident dans la présence d'une interphase capable d'assurer une liaison forte avec les fibres et la matrice et dans le choix de fibres capables de préserver et supporter une telle liaison forte avec l'interphase.

Par liaison forte, on entend ici l'existence au sein de la couche d'interphase et au niveau des interfaces entre l'interphase et les fibres et entre l'interphase et la matrice, de résistances à la rupture en cisaillement supérieures à celle pouvant être rencontrée au sein de la matrice.

Il a été constaté qu'une liaison forte peut notamment être obtenue avec une couche d'interphase en un matériau dont la microstructure est peu anisotrope. Par microstructure peu anisotrope, on entend ici une microstructure présentant des domaines anisotropes de petites dimensions (de préférence inférieures à 15 nanomètres) qui sont dispersés dans un fond quasi isotrope ou qui sont juxtaposés suivant des directions aléatoires.

Des exemples de matériaux susceptibles de convenir pour la couche d'interphase sont le nitrure de bore ou le carbone pyrolytique qui sont formés par infiltration chimique en phase vapeur dans des conditions opératoires leur conférant une microstructure peu anisotrope.

Comme indiqué plus haut, il est essentiel que les fibres utilisées permettent de préserver le caractère fort de la liaison avec l'interphase et supportent cette liaison forte.

C'est pourquoi les fibres utilisées sont des fibres essentiellement SiC contenant peu d'oxygène résiduel, typiquement moins de 5% at., et de préférence moins de 1% at., de façon à ne pas polluer la composition et/ou la microstructure de l'interphase par migration significative à l'intérieur de celle-ci d'oxygène résiduel contenu dans les fibres.

En outre, afin d'être capables de supporter une liaison forte avec la matrice, notamment afin d'éviter des dé-liaisons dues à des différences de dilatation d'origine thermique entre fibres et interphase, les fibres utilisées sont des fibres longues qui présentent une dilatation radiale telle que l'interphase soit préférentiellement en compression entre les fibres et la matrice.

Par fibres longues, on entend ici des fibres dont la longueur moyenne est supérieure à 10 cm.

Des fibres essentiellement SiC répondant à ces exigences sont notamment les fibres commercialisées sous la dénomination "Hi-Nicalon" par la société japonaise Nippon Carbon. L'utilisation de telles fibres pour former des composites unidirectionnels à matrice en nitrure de silicium Si₃N₄ est décrite dans un article de A. Kamiya et al. paru dans "Journal of the Ceramic Society of Japan, International Edition" Vol. 102 No 10, octobre 1994 sous le titre "Mechanical Properties of Unidirectional HI-NICALON Fiber Reinforced Si₃N₄ Matrix Composites". La matrice Si₃N₄ est obtenue par imprégnation au moyen d'une composition contenant une résine organique précurseur et de la poudre de Si₃N₄, puis pressage à chaud. Toutefois, l'auteur indique qu'une liaison forte entre fibres et matrice est alors obtenue en l'absence d'interphase, et que cela peut être évité en utilisant des fibres revêtues de carbone. A l'opposé, dans le matériau conforme à l'invention, l'interphase est sélectionnée pour assurer une liaison forte entre fibres et matrice.

De préférence, lors de l'élaboration d'un matériau composite conforme à l'invention, les fibres peuvent être soumises à un pré-traitement afin de favoriser la pérennité de la liaison forte avec la couche d'interphase.

Un tel pré-traitement est par exemple de nature chimique et consiste à immerger la texture fibreuse destinée à former le renfort, voire le renfort déjà élaboré, dans un bain acide afin d'éliminer de la silice présente éventuellement sur les fibres. Un tel traitement est connu en soi et décrit dans le document US-A-5 071 679.

Un autre pré-traitement réalisable sur les fibres est un traitement thermique destiné à stabiliser la fibre dimensionnellement afin d'éviter une possible dé-liaison par dilatation thermique différentielle trop importante entre fibres et couche d'interphase. Ce pré-traitement thermique est plus particulièrement souhaitable lorsque la couche d'interphase est en carbone pyrolytique plus anisotrope, c'est-à-dire avec des domaines anisotropes dont les dimensions peuvent dépasser 15 nanomètres. Il est de préférence réalisé à une température supérieure à 1250 °C, par exemple environ égale à 1300°C, sous atmosphère neutre, telle qu'une atmosphère d'argon pur.

Des exemples particuliers de mise en oeuvre de l'invention seront décrits ci-après. Référence sera faite au dessin annexé, sur lequel :
- la Figure unique montre des courbes représentant la relation entre contrainte et déformation lors d'essais de traction sur des éprouvettes en matériaux selon l'invention et en un matériau de l'art antérieur ;
   Pour réaliser une pièce en matériau composite à matrice céramique selon l'invention, on élabore d'abord une préforme constituant le renfort fibreux du matériau composite.
   La préforme est par exemple élaborée à partir d'une texture de base en fibres essentiellement SiC possédant les propriétés requises, c'est-à-dire :
- des fibres longues ayant une longueur moyenne supérieure à 10 cm, de préférence supérieure à 20 cm.
- des fibres ayant un module supérieur à 250 GPa, de préférence supérieur à 270 GPa, et
- des fibres contenant moins de 5% at. de préférence moins de 1% at., d'oxygène résiduel.

La texture de base peut être un fil, un câble, une tresse, un tissu, une nappe de fils ou câbles unidirectionnelle ou un complexe formé de plusieurs nappes unidirectionnelles superposées avec des directions différentes.

Lorsqu'un pré-traitement thermique des fibres doit être réalisé, il est effectué de préférence sur la texture de base, avant élaboration de la préforme. Lorsqu'un pré-traitement chimique de la surface des fibres doit être réalisé par immersion dans un bain acide, il peut être effectué sur la texture de base, avant élaboration de la préforme, ou sur la préforme déjà élaborée.

Selon la forme de la pièce en matériau composite à réaliser, la préforme est élaborée en empilant plusieurs strates de texture de base à plat, ou en nappant plusieurs strates de texture de base sur une forme, ou en disposant des strates de texture de base dans un outillage permettant de donner la forme voulue à la préforme, ou encore par bobinage en spires superposées ou non.

La couche d'interphase est déposée sur les fibres au sein de la préforme par infiltration chimique en phase vapeur. A cet effet, la préforme, éventuellement maintenue dans un outillage, est introduite dans une enceinte d'infiltration où une phase gazeuse est admise qui, dans des conditions de température et de pression prédéterminées, diffuse au sein de la préforme et forme un dépôt sur les fibres par décomposition d'un de ses constituants ou réaction entre plusieurs constituants.

Pour obtenir une couche d'interphase en nitrure de bore (BN) peu anisotrope, on peut utiliser une phase gazeuse constituée de façon connue par un mélange de trichlorure de bore BCl₃, d'ammoniac NH₃ et de gaz hydrogène H₂. La température dans l'enceinte d'infiltration est comprise entre 650 °C et 900 °C, de préférence voisine de 700°C et la pression est comprise entre 0,1 kPa et 3 kPa, de préférence voisine de 1,3 kPa. L'infiltration est poursuivie jusqu'à atteindre l'épaisseur désirée pour l'interphase BN, cette épaisseur étant généralement comprise entre 0,1 *µ*m et 1 *µ*m, de préférence entre 0,1 *µ*m et 0,25 *µ*m.

Pour obtenir une couche d'interphase en carbone pyrolitique (PyC) peu anisotrope, on peut utiliser une phase gazeuse constituée par exemple par du méthane ou un mélange contenant du méthane et un gaz inerte tel que de l'azote. La température dans l'enceinte d'infiltration est comprise entre 900°C et 1000°C, de préférence voisine de 1000°C et la pression est comprise entre 0,1 kPa et 3 kPa, de préférence voisine de 1,5 kPa. L'infiltration est poursuivie jusqu'à atteindre l'épaisseur désirée pour l'interphase PyC, cette épaisseur étant généralement comprise entre 0,1 *µ*m et 1 *µ*m, de préférence entre 0,1 *µ*m et 0,25 *µ*m.

L'infiltration chimique en phase vapeur peut être conduite de façon continue ou pulsée. Dans le premier cas, la phase gazeuse réactionnelle est admise à une extrémité de l'enceinte et les gaz résiduels sont extraits à l'extrémité opposée, de façon continue, en maintenant dans l'enceinte la pression voulue.

En mode pulsé, les couches élémentaires d'interphase sont formées au cours de cycles consécutifs. Chaque cycle comprend une première partie, au cours de laquelle la phase gazeuse réactionnelle est admise dans l'enceinte et maintenue dans celle-ci jusqu'à obtention d'une couche élémentaire, et une deuxième partie au cours de laquelle les gaz résiduels sont évacués de l'enceinte par pompage ou par balayage par un gaz neutre. La durée de la première partie de cycle est choisie en fonction de l'épaisseur de couche élémentaire désirée ; cette durée peut être limitée à quelques secondes ou quelques dizaines de secondes, afin de produire une couche élémentaire d'une épaisseur de l'ordre du nanomètre, c'est-à-dire inférieure à 10 nanomètres. La durée de la deuxième partie de cycle n'excède normalement pas une ou plusieurs secondes.

La réalisation de l'interphase par séquençage nanométrique, c'est-à-dire en réalisant une séquence de couches élémentaires ayant une épaisseur de l'ordre du nanomètre, présente l'avantage de conduire à une interphase ayant une microtexture et une épaisseur bien définies. En effet, au cours de chaque cycle, les conditions opératoires établies, notamment la limitation du temps de séjour, permettent de contrôler précisément la microtexture et l'épaisseur de la couche élémentaire déposée. Une possible évolution de la microtexture, telle qu'elle peut être observée lorsque l'interphase est réalisée en une seule opération d'infiltration chimique en phase vapeur, est ainsi évitée.

On notera en outre que le temps total de formation de l'interphase reste relativement court, même lorsque plusieurs dizaines de cycles sont nécessaires, car les cycles ont une durée brève et peuvent se succéder sans interruption.

La réalisation d'une interphase par séquençage nanométrique est connue dans son principe du document WO-A-95/09136, mais dans le cadre de la réalisation d'une interphase lamellaire, des couches élémentaires nanométriques de différentes natures étant formées. La réalisation d'une interphase PyC par séquençage nanométrique est décrite aussi dans le document EP-A-0 630 926, mais aussi dans le cadre de la réalisation d'une interphase lamellaire.

Après formation de l'interphase, la préforme est densifiée par la matrice céramique afin d'obtenir la pièce désirée.

De préférence, la densification est réalisée par infiltration chimique en phase vapeur.

La matrice céramique est par exemple une matrice en carbure ou nitrure capable de développer une liaison forte avec l'interphase. Des matériaux céramiques convenant à cet effet sont notamment le carbure de silicium SiC, ainsi que le carbure de bore B₄C et un système ternaire silicium-bore-carbone Si-B-C capables de conférer des propriétés autocicatrisantes à la matrice.

La matrice céramique peut comporter une seule phase céramique ou plusieurs phases différentes. Un exemple de matrice céramique séquencée formée de plusieurs phases différentes est une matrice comprenant des phases SiC alternant avec des phases B₄C ou Si-B-C comme décrit dans le document WO-A-96/30317, mais avec ou sans carbone libre en excès dans les phases B₄C et/ou Si-B-C comme prévu dans ce document. Avec une telle matrice séquencée, il est avantageux de réaliser une interphase en nitrure de bore (BN) et une première phase de matrice SiC au contact de l'interphase, ce qui permet de développer une très forte liaison interphase/matrice BN/SiC. C'est alors au niveau des liaisons inter-matrice SiC/B₄C ou SiC/Si-B-C que se produisent des décohésions ou déviations de fissures, ces liaisons étant moins fortes qu'aux interfaces fibres SiC/interphase BN et interphase BN/phase SiC. On notera que ceci reste vrai même lorsque la première phase de matrice au contact de l'interphase BN est une phase SiC, ou une autre phase céramique, par exemple B₄C.

### Exemple 1

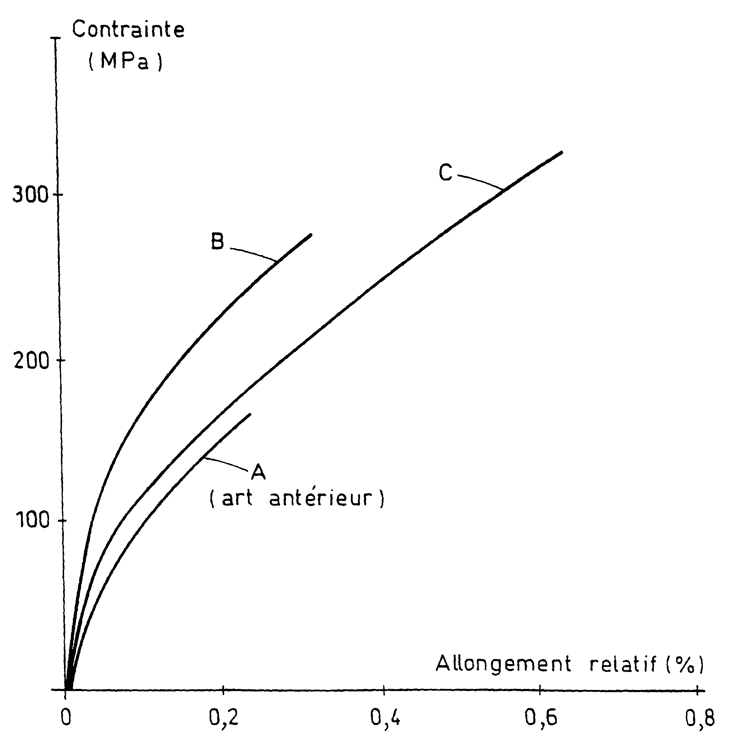

Des strates bidimensionnelles de tissu formé de fibres essentiellement SiC produites par la société japonaise Nippon Carbon sous la dénomination "Hi-Nicalon" sont empilées jusqu'à atteindre une préforme d'épaisseur égale à 2,5 mm. La préforme est pré-traitée par immersion dans un bain acide, comme décrit dans le document US-A-5 071 679. Une interphase de nitrure de bore BN est formée par infiltration chimique en phase vapeur à partir d'une phase gazeuse contenant un mélange de chlorure de bore BCl₃, d'ammoniac NH₃ et de gaz d'hydrogène H₂. L'infiltration est réalisée en continu à une température de 700°C et sous une pression de 1,3 kPa, conduisant à une interphase BN quasi isotrope. L'épaisseur de l'interphase est d'environ 0,15 *µ*m en moyenne. Enfin, la préforme munie de l'interphase est densifiée par une matrice en carbure de silicium SiC par infiltration chimique en phase vapeur à partir d'une phase gazeuse contenant du méthyltrichlorosilane (CH₃ Si Cl₃) et du gaz hydrogène (H₂), à une température comprise entre 1000°C et 1030°C et sous une pression comprise entre 7 kPa et 12 kPa, par exemple en utilisant le procédé décrit dans le document WO-A-95/16803. Une éprouvette est usinée dans le matériau composite obtenu SiC/BN/SiC et est soumise à un essai en traction à température ambiante et sous air. La courbe B de la Figure 1 montre la relation entre la contrainte exercée et l'allongement mesuré. La rupture se produit sous une contrainte de 290 MPa avec un allongement relatif de 0,33%.

Un examen au microscope électronique à balayage montre que les fibres de la préforme ne présentent aucune trace d'agression par les gaz précurseurs utilisés pour la formation de l'interphase BN. Aucune trace de fissuration ou de décohésion n'est décelée au niveau de l'interphase BN ou des interfaces BN/fibres et BN/matrice, mais des fissures intra-matrice sont mises en évidence démontrant au sein de celle-ci l'existence de zones présentant une résistance au cisaillement plus faible. Un examen au TEM montre que le BN de l'interphase est constitué de petits domaines anisotropes non orientés inclus dans une phase relativement isotrope, ce qui lui confère globalement une microstructure peu anisotrope.

Une autre éprouvette du matériau composite obtenu SiC/BN/SiC est soumise à un essai de fatigue en traction sous air à 600°C, l'essai consistant à appliquer une contrainte variant de 0 à 200 MPa à une fréquence de 20 Hz. La durée de vie constatée est de 44 h.

### Exemple comparatif n° 1

On réalise un matériau composite à matrice SiC comme décrit dans l'Exemple 1, mais en remplaçant les fibres "Hi-Nicalon" par des fibres de type "Nicalon NL 200" également produites par la société japonaise Nippon Carbon, et en formant une interphase BN de microstructure peu anisotrope Les fibres "Nicalon NL 200" se différencient des fibres "Hi-Nicalon", notamment par une teneur en oxygène résiduel assez élevée (environ 13% at.) et un module plus faible (environ 220 GPa). L'interphase BN est réalisée par infiltration chimique en phase vapeur à partir d'une même phase gazeuse et dans les mêmes conditions opératoires. L'infiltration est poursuivie jusqu'à obtenir une interphase d'épaisseur moyenne égale à environ 0,15 *µ*m.

Après densification par la matrice SiC, un essai en traction est effectué à température ambiante sur une éprouvette du matériau SiC/BN/SiC obtenu. La courbe A de la Figure 1 montre la relation entre contrainte exercée et allongement relatif. La rupture se produit sous une contrainte de 180 MPa avec un allongement relatif de 0,25%.

Une autre éprouvette est soumise à un essai de fatigue en traction sous air à 600°C. Avec une contrainte variant de 0 à seulement 120 MPa à une fréquence de 20 Hz, la rupture de l'éprouvette est constatée au bout de 10 h.

Le matériau SiC/BN/SiC de l'Exemple 1 non seulement apporte une protection accrue de l'interphase et des fibres de renfort vis-à-vis de l'oxygène du milieu ambiant, mais présente une contrainte à rupture sensiblement plus élevée, en comparaison avec le matériau de l'art antérieur.

### Exemple 2

On procède comme dans l'Exemple 1, mais en remplaçant la matrice SiC par une matrice auto-cicatrisante semblable à celle décrite dans le document WO-A-96/30317, c'est-à-dire comprenant la séquence suivante :
(A) une première phase SiC au contact de l'interphase BN,
(B) une phase de carbure de bore contenant du carbone non lié en excès (B₄C+C),
(C) une phase SiC,
(D) une phase B₄C+C,
(E) une phase SiC,
(F) une phase d'un système ternaire Si-B-C contenant du carbone en excès non lié à Si ou B (Si-B-C+C),
(G) une phase SiC,
(H) une phase Si-B-C+C, et
(I) une phase SiC.

Le pourcentage massique de carbone libre dans les phases (B), (D), (F) et (H) est égal respectivement à 26%, 20%, 15% et 8%.

Les phases SiC sont réalisées par infiltration chimique en phase vapeur comme dans l'Exemple 1.

Les phases B₄C+C sont réalisées par infiltration chimique en phase vapeur à partir d'une phase gazeuse comprenant BCl₃, un hydrocarbure précurseur de C tel que le méthane (CH₄) et H₂, à une température comprise entre 800°C et 1150°C et sous une pression comprise entre 0,1 kPa et 50 kPa. Le pourcentage massique de carbone libre en excès dans la phase B₄C+C obtenue est commandé en sélectionnant les proportions des précurseurs BCl₃, CH₄ et H₂.

Les phases Si-B-C+C sont réalisées par infiltration chimique en phase vapeur à partir d'une phase gazeuse comprenant CH₃ Si Cl₃, BCl₃ et H₂, à une température comprise entre 800°C et 1150°C et sous une pression comprise entre 0,1 kPa et 50 kPa. Le pourcentage massique de carbone libre en excès dans la phase Si-B-C+C obtenue est commandé en sélectionnant les proportions des précurseurs CH₃ Si Cl₃, BCl₃, CH₄ et H₂.

Une éprouvette du matériau composite obtenu est soumise à un essai en traction à température ambiante. La courbe C de la Figure 1 montre la relation entre la contrainte exercée et l'allongement relatif mesuré. La rupture se produit sous une contrainte de 332 MPa avec un allongement relatif de 0,62%.

Un examen au microscope électronique à balayage montre l'absence de fissurations ou décohésions au niveau de l'interphase BN.

Deux autres éprouvettes du matériau obtenu sont soumises à des essais de fatigue en traction sous air respectivement à 600°C et 1200°C, chaque essai consistant à appliquer une contrainte variant de 0 à 200 MPa à une fréquence de 20 Hz. A 600°C, la durée de vie est supérieure à 100 h et à 1200°C elle est d'environ 30 h.

Ces résultats sont à comparer à ceux déjà indiqués obtenus avec une éprouvette du matériau selon l'exemple comparatif n° 1

## Revendications

1. Matériau composite à matrice céramique comprenant un renfort fibreux en fibres constituées essentiellement de carbure de silicium, et une couche d'interphase entre les fibres du renfort et la matrice,
**caractérisé en ce que** les fibres de renfort sont des fibres longues qui contiennent moins de 5% at. d'oxygène résiduel et ont un module supérieur à 250 GPa, et la couche d'interphase est en un matériau de microstructure peu anisotrope obtenu par infiltration chimique en phase vapeur, la couche d'interphase étant fortement liée aux fibres et à la matrice de sorte que les résistances à la rupture par cisaillement au sein de la couche d'interphase et au niveau des liaisons fibres-interphase et interphase-matrice sont supérieures à celles rencontrées au sein de la matrice.

2. Matériau composite selon la revendication 1, **caractérisé en ce que** les fibres du renfort contiennent moins de 1% at. d'oxygène résiduel.

3. Matériau composite selon l'une quelconque des revendications 1 et 2, **caractérisé en ce que** l'interphase est constituée par du nitrure de bore peu anisotrope.

4. Matériau composite selon l'une quelconque des revendications 1 et 2, **caractérisé en ce que** l'interphase est constituée par du carbone pyrolytique peu anisotrope.

5. Matériau composite selon l'une quelconque des revendications 1 à 4, **caractérisé en ce que** la matrice comprend au moins une phase de carbure de silicium.

6. Matériau composite selon l'une quelconque des revendications 1 à 5, **caractérisé en ce que** la matrice est une matrice séquencée comprenant plusieurs phases céramique, et la résistance à la rupture par cisaillement entre phases de matrice est inférieure à celles entre fibres et interphase et entre interphase et matrice.

7. Matériau composite selon la revendication 6, **caractérisé en ce que** la matrice comprend plusieurs phases choisies parmi le carbure de silicium, le carbure de bore, et un système ternaire silicium-bore-carbone.

8. Matériau composite selon l'une quelconque des revendications 1 et 2, **caractérisé en ce que** la matrice est une matrice séquencée comprenant plusieurs phases céramique, la couche d'interphase est en nitrure de bore et la première phase de matrice au contact de l'interphase est en carbure de silicium.

9. Procédé de fabrication d'une pièce en matériau composite à matrice céramique, comprenant l'élaboration d'une préforme fibreuse en fibres constituées essentiellement de carbure de silicium, la formation d'une couche d'interphase sur les fibres, et la densification de la préforme munie de la couche d'interphase par la matrice céramique, **caractérisé en ce que** l'on élabore la préforme à partir de fibres contenant moins de 5% at. d'oxygène et ayant un module supérieur à 250 GPa, et l'on forme sur les fibres une couche d'interphase peu anisotrope par infiltration chimique en phase vapeur, avant densification par la matrice céramique, de sorte que la couche d'interphase soit fortement liée aux fibres et à la matrice, les résistances à la rupture par cisaillement au sein de la couche d'interphase et au niveau des liaisons fibres-interphase et interphase-matrice étant supérieures à celles existant au sein de la matrice.

10. Procédé selon la revendication 9, **caractérisé en ce que** l'on élabore la préforme à partir de fibres contenant moins de 1% at. d'oxygène.

11. Procédé selon l'une quelconque des revendications 9 et 10, **caractérisé en ce que** l'on forme sur les fibres une couche d'interphase en nitrure de bore.

12. Procédé selon l'une quelconque des revendications 9 et 10, **caractérisé en ce que** l'on forme sur les fibres une couche d'interphase en carbone pyrolytique.

13. Procédé selon l'une quelconque des revendications 9 à 12, **caractérisé en ce que** l'on forme la couche d'interphase par séquençage nanométrique.

14. Procédé selon l'une quelconque des revendications 9 à 13, **caractérisé en ce que**, avant formation de la couche d'interphase, on réalise un traitement thermique des fibres de la préforme à une température supérieure à 1250°C et sous atmosphère neutre.

15. Procédé selon la revendication 14, **caractérisé en ce que** le traitement thermique est réalisé sous atmosphère d'argon.

16. Procédé selon l'une quelconque des revendications 9 à 15, **caractérisé en ce que**, avant formation de la couche d'interphase, on réalise un traitement chimique de la surface des fibres par immersion dans un bain acide.

17. Procédé selon l'une quelconque des revendications 9 à 16, **caractérisé en ce que** la densification de la préforme munie de la couche d'interphase est réalisée par infiltration chimique en phase vapeur.

## Patentansprüche

1. Verbundmaterial mit Keramikmatrix, aufweisend eine Faserverstärkung aus Fasern, die im wesentlichen aus Siliciumcarbid bestehen, und eine Zwischenphasenschicht zwischen den Verstärkungsfasern und der Matrix,
**dadurch gekennzeichnet, daß** die Verstärkungsfasern lange Fasern sind, die weniger als 5 Atomprozent Restsauerstoff enthalten und einen Modul von größer als 250 GPa haben, und daß die Zwischenphasenschicht aus einem Material von wenig anisotroper Mikrostruktur ist, erhalten durch chemische Infiltration in der Dampfphase, wobei die Zwischenphasenschicht fest an die Fasern und an die Matrix gebunden ist, dergestalt, daß die Beständigkeit gegen Schubbruch im Inneren der Zwischenphasenschicht und an den Verbindungen Fasern-Zwischenphase und Zwischenphase-Matrix größer als die im Inneren der Matrix anzutreffende ist.

2. Verbundmaterial nach Anspruch 1,
**dadurch gekennzeichnet, daß** die Verstärkungsfasern weniger als 1 Atomprozent Restsauerstoff enthalten.

3. Verbundmaterial nach Anspruch 1 oder 2,
**dadurch gekennzeichnet, daß** die Zwischenphase aus wenig anisotropem Bornitrid besteht.

4. Verbundmaterial nach Anspruch 1 oder 2,
**dadurch gekennzeichnet, daß** die Zwischenphase aus wenig anisotropem Pyrokohlenstoff besteht.

5. Verbundmaterial nach einem der Ansprüche 1 bis 4,
**dadurch gekennzeichnet, daß** die Matrix mindestens eine Phase aus Siliciumcarbid aufweist.

6. Verbundmaterial nach einem der Ansprüche 1 bis 5,
**dadurch gekennzeichnet, daß** die Matrix eine Sequenzmatrix ist, die mehrere Keramikphasen aufweist, und daß die Beständigkeit gegen Schubbruch zwischen Phasen der Matrix kleiner ist als die zwischen Fasern und Zwischenphase und zwischen Zwischenphase und Matrix.

7. Verbundmaterial nach Anspruch 6,
**dadurch gekennzeichnet, daß** die Matrix mehrere Phasen aufweist, die ausgewählt sind aus Siliciumcarbid, Borcarbid und einem ternären Silicium-Bor-Kohlenstoff-System.

8. Verbundmaterial nach Anspruch 1 oder 2,
**dadurch gekennzeichnet, daß** die Matrix eine Sequenzmatrix ist, die mehrere Keramikphasen aufweist, die Zwischenphasenschicht aus Bornitrid ist und die erste Phase der Matrix in Kontakt mit der Zwischenphase aus Siliciumcarbid ist.

9. Verfahren zur Herstellung eines Teils aus Verbundmaterial mit Keramikmatrix, aufweisend die Anfertigung einer Faservorform aus Fasern, die im wesentlichen aus Siliciumcarbid bestehen, die Ausbildung einer Zwischenphasenschicht auf den Fasern und die Verdichtung der mit der Zwischenphasenschicht versehenen Vorform mit der Keramikmatrix,
**dadurch gekennzeichnet, daß** man die Vorform ausgehend von Fasern, die weniger als 5 Atomprozent Sauerstoff enthalten und einen Modul von größer als 250 GPa haben, anfertigt und daß man vor Verdichtung durch die Keramikmatrix auf den Fasern durch chemischen Infiltration in der Dampfphase eine wenig anisotrope Zwischenphasenschicht ausbildet, dergestalt, daß die Zwischenphasenschicht fest an die Fasern und an die Matrix gebunden wird, wobei die Beständigkeit gegen Schubbruch im Inneren der Zwischenphasenschicht und an den Verbindungen Fasern-Zwischenphase und Zwischenphase-Matrix größer ist als die, die es im Inneren der Matrix gibt.

10. Verfahren nach Anspruch 9,
**dadurch gekennzeichnet, daß** man die Vorform ausgehend von Fasern, die weniger als 1 Atomprozent Sauerstoff enthalten, anfertigt.

11. Verfahren nach Anspruch 9 oder 10,
**dadurch gekennzeichnet, daß** man auf den Fasern eine Zwischenphasenschicht aus Bornitrid ausbildet.

12. Verfahren nach Anspruch 9 oder 10,
**dadurch gekennzeichnet, daß** man auf den Fasern eine Zwischenphasenschicht aus Pyrokohlenstoff ausbildet.

13. Verfahren nach einem der Ansprüche 9 bis 12,
**dadurch gekennzeichnet, daß** man die Zwischenphasenschicht durch Nanometer-Sequenzierung ausbildet.

14. Verfahren nach einem der Ansprüche 9 bis 13,
**dadurch gekennzeichnet, daß** man vor Ausbildung der Zwischenphasenschicht eine thermische Behandlung der Fasern der Vorform bei einer Temperatur oberhalb 1250°C und unter neutraler Atmosphäre durchführt.

15. Verfahren nach Anspruch 14,
**dadurch gekennzeichnet, daß** die thermische Behandlung unter Argonatmosphäre durchgeführt wird.

16. Verfahren nach einem der Ansprüche 9 bis 15,
**dadurch gekennzeichnet, daß** man vor Ausbildung der Zwischenphasenschicht eine chemische Behandlung der Oberfläche der Fasern durch Eintauchen in ein Säurebad durchführt.

17. Verfahren nach einem der Ansprüche 9 bis 16,
**dadurch gekennzeichnet, daß** die Verdichtung der mit der Zwischenphasenschicht versehenen Vorform durch chemische Infiltration in der Dampfphase durchgeführt wird.

## Claims

1. A ceramic matrix composite material comprising fiber reinforcement of fibers essentially constituted by silicon carbide, and an interphase layer between the fibers of the reinforcement and the matrix,
the material being **characterised in that** the fibers of the reinforcement are long fibers containing less than 5% atomic residual oxygen and having a modulus greater than 250 GPa, and the interphase layer is made of a material whose microstructure presents little anisotropy and is obtained by chemical vapor infiltration, the interphase layer being strongly bonded to the fibers and to the matrix in such a manner that the shear breaking strengths within the interphase layer and at the fiber-interphase bond and at the interphase-matrix bond are greater than the shear breaking strengths encountered within the matrix.

2. A composite material according to claim 1, **characterised in that** the fibers of the reinforcement contain less than 1% atomic residual oxygen.

3. A composite material according to claim 1 or 2, **characterised in that** the interphase is constituted by boron nitride that presents little anisotropy.

4. A composite material according to claim 1 or 2, **characterised in that** the interphase is constituted by pyrolytic carbon that presents little anisotropy.

5. A composite material according to any one of claims 1 to 4, **characterised in that** the matrix comprises at least one phase of silicon carbide.

6. A composite material according to any one of claims 1 to 5, **characterised in that** the matrix is a sequenced matrix comprising a plurality of ceramic phases, the shear breaking strength between the phases of the matrix being less than the shear breaking strengths between the fibers and the interphase and between the interphase and the matrix.

7. A composite material according to claim 6, **characterised in that** the matrix comprises a plurality of phases selected from silicon carbide, boron carbide, and a ternary silicon-boron-carbon system.

8. A composite material according to claim 1 or 2, **characterised in that** the matrix is a sequenced matrix comprising a plurality of ceramic phases, the interphase layer is of boron nitride, and the first phase of the matrix in contact with the interphase is of silicon carbide.

9. A method of manufacturing a ceramic matrix composite material piece, the method comprising preparing a fiber preform out of fibers constituted essentially by silicon carbide, forming an interphase layer on the fibers, and densifying the preform with its interphase layer by the ceramic matrix, the method being **characterised in that** the preform is made from fibers containing less than 5% atomic oxygen and having a modulus greater than 250 GPa, and the interphase layer formed on the fibers presents little anisotropy and is made by chemical vapor infiltration prior to densification by the ceramic matrix, such that the interphase layer is strongly bonded to the fibers and to the matrix, with the shear breaking strengths within the interphase layer and at the fiber-interphase bond and at the interphase-matrix bond being greater than the shear breaking strengths encountered within the matrix.

10. A method according to claim 9, **characterised in that** the preform is made from fibers containing less than 1% atomic oxygen.

11. A method according to claim 9 or 10, **characterised in that** an interphase layer of boron nitride is formed on the fibers.

12. A method according to claim 9 or 10, **characterised in that** an interphase layer of pyrolytic carbon is formed on the fibers.

13. A method according to any one of claims 9 to 12, **characterised in that** the interphase layer is formed by nanometer sequencing.

14. A method according to any one of claims 9 to 13, **characterised in that**, prior to forming the interphase layer, the fibers of the preform are subjected to heat treatment at a temperature greater than 1250°C under an inert atmosphere.

15. A method according to claim 14, **characterised in that** the heat treatment is performed under an argon atmosphere.

16. A method according to any one of claims 9 to 15, **characterised in that**, prior to forming the interphase layer, chemical treatment is applied to the surface of the fibers by immersion in a bath of acid.

17. A method according to any one of claims 9 to 16, **characterised in that** the preform provided with the interphase layer is densified by chemical vapor infiltration.
